# EUROPÄISCHE PATENTSCHRIFT

(11) **EP 3 405 334 B1**
(45) Veröffentlichungstag und Bekanntmachung des Hinweises auf die Patenterteilung: **15.06.2022**
(21) Anmeldenummer: 17701114.5
(22) Anmeldetag: 20.01.2017
(51) Int. Cl.: B30B 15/06, B33Y 80/00

(54) **PRESSPOLSTER FÜR EINE HYDRAULISCHE HEIZPRESSE UND VERFAHREN ZU DESSEN HERSTELLUNG**
PRESS PAD FOR A HYDRAULIC HEAT PRESS, AND METHOD FOR PRODUCING IT
COUSSINET DE PRESSE POUR PRESSE CHAUFFANTE HYDRAULIQUE ET SON PROCÉDÉ DE PRODUCTION

(30) Priorität: 20.01.2016 DE 202016000367 U
(43) Veröffentlichungstag der Anmeldung: 28.11.2018
(73) Patentinhaber: Hueck Rheinische GmbH, 41747 Viersen (DE)
(72) Erfinder: ESPE, Rolf, 44795 Bochum (DE)
(74) Vertreter: Bauer, Dirk
(86) Internationale Anmeldenummer: PCT/EP2017/051172
(87) Internationale Veröffentlichungsnummer: WO 2017/125540

(56) Entgegenhaltungen:
- EP-A1- 2 756 947
- DE-A1- 2 338 749
- DE-U1- 29 721 495
- DE-U1-202007 006 849
- DE-U1-202015 006 923
- DE-U1-202015 007 762
- US-A1- 2005 212 184

## Beschreibung

### Einleitung

Die Erfindung betrifft ein Presspolster zur Verwendung in einer hydraulischen Ein- oder Mehretagen-Heizpresse, umfassend ein Stützgewebe, vorzugsweise mit Metallfäden, und einen Elastomeraufschlag, bestehend aus einem vernetzten Kautschuk, Fluorsilikonkautschuk.

Darüber hinaus betritt die Erfindung ein Verfahren gemäß Patentanspruch 7 zur Herstellung eines derartigen Presspolsters.

### Stand der Technik

In hydraulischen Heizpressen werden nach dem Stand der Technik Holzwerkstoffplatten mit verschiedenen Kunststoffen beschichtet, wobei die Holzwerkstoffplatten anschließend zur Möbelherstellung oder als Fußbodenplatten Verwendung finden. Es können aber auch andere Plattenmaterialien, wie beispielsweise HPL-Kompaktplatten (High Pressure Laminate) hergestellt werden. Bei der Herstellung von Fußbodenplatten werden meist so genannte HDF-Platten (High Density Fibreboard) mit kunstharzimprägnierten Dekorpapieren, die bedruckt oder einfarbig sind, beschichtet. Die Kunstharze bestehen in der Regel aus Duroplastharzen, die in den Heizpressen unter Druck und Temperatur endkondensiert werden und irreversible feste Oberflächen ausbilden.

Die eingesetzten Edelzellstoffpapiere werden mit den vorkondensierten Tränkharzen, die zum größten Teil aus Melamin-/Formaldehyd oder deren Mischharzen Melamin-/Harnstoff und Formaldehyd bestehen, in Imprägnieranlagen mit anschließender Trockenzone imprägniert und bis zu einer bestimmtem Molekülkettenlänge vorkondensiert. Die so entstehenden Papiere, auch Kunstharzfilme genannt, können dann anschließend in den Pressenanlagen weiter verwendet werden.

Teilweise werden über den Dekorfilmen zusätzlich dünne, mit Harz imprägniere Overlaypapiere eingesetzt. Die Overlaypapiere weisen Flächengewichte von 20 g/m² bis 60 g/m² auf und sind zusätzlich entweder im Harz oder im Papier mit abriebfesten Korundpartikeln (Al₂O₃) ausgerüstet. Diese Zusatzstoffe sollen später nach der Beschichtung die Oberflächenhärte der Fußbodenplatten erhöhen und sie gegen Abrieb schützen. Die Härte der Korundteilchen liegt bei ca. 1.800 HV (Härte nach Vickers).

Als Trägermaterialien werden relativ harte Holzwerkstoffplatten auf der Basis von HDF eingesetzt, deren Rohdichten bei 900 kg/m³ bis 1.100 kg/m³ liegen. Um derartige Platten zu beschichten, benötigt man hohe spezifisch Pressdrücke, die zwischen ca. 40 kg/m² bis 60 kg/m² betragen können. Besonders werden derartige Pressdrücke erforderlich, wenn die Oberflächen noch zusätzlich mit einer Struktur geprägt werden. Für die Herstellung der Fußbodenplatten z.B. werden die HDF-Rohplatten mit den entsprechenden Overlaypapieren und den bedruckten Dekorpapieren mittels einer Beschickeinrichtung in die Pressenanlage eingefahren. Da die Presszeiten relativ kurz sind und die fertigen Platten heiß entnommen werden, nennt man die verwendeten Heizpressen "Kurztaktpressen", wobei es sich um Einetagenanlagen handelt.

Die notwendigen Pressbleche und Presspolster sind in den Anlagen fest fixiert und ständig aufgeheizt. Die jeweils zwischen Heizplatte und Pressblech befindlichen Presspolster dienen zum Druckausgleich, der nötig ist, da die Anlagen Dickentoleranzen aufweisen. Typischerweise betragen diese Toleranzen zwischen 0,25 mm und 0,50 mm, die allerdings über die Querschnittsfläche der Presse ungleich verteilt sind. Häufig werden daher Spezialpolster benötigt, die diese ungleich verteilten Toleranzen kompensieren sollen. Gelingt eine solche Druckkompensation nicht und treten während des Pressvorgangs größere Druckunterschiede über die Fläche betrachtet auf, so führt dies bei den Melaminharz-Oberflächen zu intransparenten Stellen. Dies beruht auf dem Kondensationsmechanismus von duroplastischen Harzen. Während der Kondensation in der Pressenanlage entsteht unter Druck und Temperatur Wasser und Formaldehyd, welches dampfförmig frei wird. Da während des Pressvorgangs das System über den größtenteils aus Stahl bestehenden Pressblechen abgeschlossen ist, muss der entstehende Wasser- und Formaldehyddampf in die Papierbahnen und die HDF-Platte difundieren.

Kommt es nicht zu dieser Diffusion während der Harz-Flüssigphase, bleiben die Dampfblasen mit der fortschreitenden Harz-Viskositätserhöhung eingeschlossen. Diese eingeschlossenen Dampfblasen zeigen durch den unterschiedlichen Brechungsindex Luft/Harz = 1,0 : 1,55 intransparente Oberflächen, welche als Fehlstellen bewertet werden. Speziell bei dunklen Dekoroberflächen sind diese Fehlstellen als so genannte "white spots" sichtbar. Dies führt dazu, dass derartiges Plattenmaterial als fehlerhaft verworfen wird.

Wie bereits zuvor erwähnt, betragen die Dickentoleranzen der üblichen Pressenanlagen bis zu 0,5 mm. Um gleichwohl an allen Stellen der Presse (über die Querschnittsfläche betrachtet) einen erforderlichen Mindestpressdruck sicherzustellen, sind zwei Alternativen möglich: Entweder wird der Pressdruck über die gesamte Anlagenfläche derart erhöht, dass an jeder Stelle der Plattenoberfläche der notwendige Pressdruck vorherrscht, um eine geschlossene und transparente Oberfläche auszubilden, d.h. eine Gasblasenbildung zu unterbinden. Es wurde aber festgestellt, dass lokal zu hohe Pressdrücke, insbesondere wenn keine ausgleichenden Presspolster verwendet werden, auch zu einer starken Erhöhung der Fließfähigkeit (Reduzierung der Viskosität) der Tränkharze an den betroffenen Stellen führt. Ein zu hoher Harzfluss führt lokal zu harzarmen Oberflächen, da das Harz in diesem Fall zu stark in die Zellulosefaser der Dekorpapiere eindringt und an den betreffenden Stellen sodann eine ungenügende aufstehende Harzschicht über dem Dekorpapier ausbildet. Fehlendes Harz bildet im Ergebnis gleichfalls den Glanzgrad der Pressbleche nicht mehr sauber ab und es zeigen sich so genannte glanzfleckige Oberflächen.

Alternativ zu einer generellen Pressdruckerhöhung ist es auch möglich, Presspolster einzusetzen, die auch bei großen Dickentoleranzen in der Heizpresse eine hinreichende Druckverteilung und -kompensation bewirken, so dass Stellen mit zu geringem Pressdruck nicht existieren. Eine Anpassung an die individuellen Gegebenheiten einer jeden Presse ist in diesem Fall mitunter unvermeidlich, wenngleich auch sehr aufwändig. Denn üblicherweise verfügen nach dem Stand der Technik die Presspolster über ihre gesamte Fläche über eine konstante Dicke und sind meistens mit Fäden aus unterschiedlichsten Materialien ausgebildet. Die verschiedenen bekannten Ausführungsformen erfüllen aber meist nicht die Anforderungen, die von den heutigen modernen Beschichtungsverfahren gefordert werden.

In der DE 23 19 593 ist ein als Stützgewebe fungierendes Metallgewebe offenbart, das anschließend mit einem unvernetzten Silikonharz beschichtet wird, woraufhin die Aushärtung bzw. Vernetzung in einem gesonderten Schritt vorgenommen wird. Beide Seiten des vorbekannten Presspolsters müssen getrennt voneinander beschichtet und sodann die Beschichtung ausgehärtet werden.

Die DE 90 17 587 U1 beschreibt ein Presspolster, das aus einem flexiblen Polstergewebe besteht, das ein aromatisches Polyamid-Garn wie weitere, andere Garnmaterialien aufweist. Das bekannte Presspolster enthält weiterhin Metallfäden in einem Anteil von bis zu 70 %, bezogen auf das Gesamtgewicht des Presspolsters, womit die Wärmeleitfähigkeit des Presspolsters auf den erforderlichen Wert eingestellt wird.

In der EP 0 173 763 A2 wird ein Presspolster für Hoch- und Niederdruckpressen beschrieben, welches aus verschiedenen Materialien besteht, z.B. Garn aus aromatischem Polyamid mit Metallfäden, Metallfäden, hitzebeständiges Filament aus Gummi oder einer Gummimischung, hitzebeständiges Filament aus Silikon oder Silikonmischungen mit und ohne Metallfäden.

Zum weiteren Stand der Technik zählt ein Presspolster, das in der EP 0 735 949 B1 beschrieben wird. Bei diesem Presspolster weisen die Kettfäden und/oder die Schussfäden ein Silikonelastomer auf. In dem Gewebe können beispielsweise Vollfäden aus Silikon enthalten sein, oder aber Fäden, die eine Seele aus Metalldraht aufweisen und mit Silikon ummantelt sind.

Ein weiteres Presspolster ist aus der EP 1 136 248 A1 bekannt. Dieses Presspolster weist ein Gewebe auf, das einen wesentlichen Anteil eines Fluorelastomers und/oder Silikon-Fluorelastomers aufweist. Auch kann das Gewebe einen wesentlichen Anteil eines Blendelastomers aufweisen, das durch die Vernetzung einer Mischung aus einem Silikonkautschuk und einem Fluorkautschuk oder einem Silikon-Fluorkautschuk hergestellt ist. Die beschriebenen Elastomerarten sind dabei als Fadenmaterial ausgebildet und zu einem entsprechenden Gewebe ausgestaltet, das darüber hinaus als Kett- oder Schussfäden verlitzte Metallfäden aufweist.

Außerdem ist aus der EP 1 300 235 A1 ein Presspolster bekannt, das einen textilen Träger mit Fäden aufweist, von denen wenigstens ein Teil Wärmeleitfäden bildet, die entweder direkt oder über Kontakt mit anderen Wärmeleitfäden eine Wärmeübertragung von einer Außenseite zu einer gegenüberliegenden Außenseite des Presspolsters bewirken. Der Träger weist eine Polsterschicht aus einem gummielastischen Werkstoff in dem Bereich der sich kreuzenden Fäden auf. Die Besonderheit dieses Presspolsters besteht darin, dass die Dicke der Polsterschicht geringer ist als die des Trägers und die Polsterschicht derart in den Träger eingebettet ist, dass Wärmeleitfäden auf beiden Außenseiten des Presspolsters über die Polsterschicht vorstehen. Dabei soll die Polsterschicht mittels eines Rakelprozesses in das textile Gewebe eingebracht werden.

EP 2 756 947 A1 offenbart ein Presspolster gemäss dem Oberbegriff des Anspruchs 1.

DE 20 2015 007762 U1 offenbart ein Presspolster mit einer Oberfläche hergestellt durch ein SD-Druckverfahren. Bei allen vorbekannten Presspolstern erfolgt die Herstellung des Gewebes auf entsprechenden Webmaschinen. Die vorbekannten Presspolster weisen über ihre gesamte

Fläche eine einheitliche, d.h. konstante, Dicke auf und sind daher nur bedingt in der Lage, die in den Pressenanlagen vorhandenen Dickentoleranzen auszugleichen. Um den erforderlichen spezifischen Pressdruck im Betrieb auch an Stellen mit größerem Abstand zwischen den Pressblechen zu gewährleisten, wird der Pressdruck über der gesamten Fläche der Pressenanlage erhöht. Dies führt, wie bereits zuvor erläutert, zu partiell extrem hohen Pressdrücken und einer lokal inakzeptablen Harzverdrängung, die sich wiederum als Oberflächenfehler äußert.

### Aufgabe

Der Erfindung liegt die Aufgabe zugrunde, ein Presspolster und ein Verfahren zu dessen Herstellung vorzuschlagen, das die Dickentoleranzen und die damit im Pressbetrieb einhergehenden Druck- und Temperaturdifferenzen innerhalb der Pressenanlage so ausgleicht, dass der Pressdruck und die Temperatur über die gesamte Fläche des Presspolsters und des Pressgutes möglichst gleich sind, so dass sich auch bei komplizierten Prägestrukturen einwandfreie Oberflächen erzeugen lassen.

### Lösung

Ausgehend von einem Presspolster der eingangs beschriebenen Art wird diese Aufgabe durch ein Presspolster mit den Merkmalen des Anspruchs 1 und ein Verfahren zur Herstellung eines Presspolsters mit den Merkmalen des Anspruchs 7 gelöst. Erfindungsgemäß werden somit die unterschiedlichen Dickentoleranzen der Pressenanlage, der Pressbleche und, falls gewünscht, auch die der Holzwerkstoffplatten berücksichtigt. Nach Erstellung einer virtuellen Zeichnung werden die für die Pressenanlage bzw. für das Pressgut spezifischen Daten in einem Computerprogramm zur Steuerung der Druckeinrichtung eingegeben. Hieraus werden die Raumkoordinaten errechnet, die für die während des Druckvorgangs benötigten Positionierungen der X-, Y- und Z-Achsen der Druckeinrichtung notwendig sind. Nach Erstellen einer Druckanweisung erfolgt dann ein vorzugsweise schichtweiser Auftrag des jeweiligen Kautschuks. Die im späteren Pressbetrieb auftretenden lokalen Temperaturdifferenzen in der Pressenanlage werden bei der Herstellung des Grundgewebes berücksichtigt.

Zur späteren Aufbringung des Elastomerauftrags wird zunächst ein Stützgewebe gefertigt, welches vorzugsweise aus Metallfäden besteht, da sie gute wärmeleitfähige Eigenschaften aufweisen. Geeignete Metallfäden sind z.B. Kupfer, Messing, Bronze, Aluminium oder Stahl. Es können aber je nach Anforderung andere Metalle eingesetzt werden. Das Metallgewebe kann je nach Bedarf der gewünschten Wärmeleitfähigkeit auch aus unterschiedlichen Metallfäden bestehen um beispielsweise einer differenzierten Wärmeverteilung innerhalb der Pressenanlage Rechnung zu tragen. Eine bestimmte Bindungsart des Stützgewebes wird nicht zwingend vorgeschrieben, sondern die Auswahl richtet sich nach den technischen Gegebenheiten der jeweiligen Beschichtungseinrichtung, d.h. Pressenanlage. Vorteilhaft hat sich die Bindungsart "Tuchbindung" (= Leinwandbindung) erwiesen. Für den Webprozess eines Metallgewebes ist es empfehlenswert, verlitzte Metallfäden als Schuss- und/oder Kettfäden einzusetzen. Wird eine gleichmäßige Wärmeleitfähigkeit des Stützgewebes benötigt, so sind die Kett- und Schussfäden ebenfalls in gleicher Metallart zu wählen. Bei ungleicher Wärmeverteilung an der Pressenanlage kann diese bereits bei der Gewebeherstellung, entsprechend der Wärmeverteilungsmuster einer Pressenanlage, berücksichtigt werden. Die jeweiligen Kett- und/oder Schussfäden benötigen dann Metallfäden mit unterschiedlichen Wärmeleitzahlen. Die Wärmeverteilungszonen der Heizplatten der jeweiligen Pressenanlage werden dazu vorher mit Thermoelementen oder mit einer Wärmebildkamera ausgemessen. Danach wird ein Verteilungsmuster skizziert und die entsprechenden Zonen auf das Postermaß übertragen. Nach diesem Muster können anschließend die Kett- und Schussfäden bestimmt und diese Zonen im Metallgewebe abgebildet werden.

Der Auftrag des Kautschuks auf das Stützgewebe geschieht mittels einer 3D-Druckeinrichtung und erfolgt vorzugsweise schichtweise nach den Druckanweisungen, die zuvor erstellt und in die Steuerungssoftware der Druckeinrichtung implementier wurden. Unterschiedliche Dickentoleranzen, die in den Pressenanlagen vorhanden sind, werden ebenfalls vorher genau bestimmt und berücksichtigt. Dazu bedient man sich bekannter Methoden, indem z.B. die Verformung eines Blei- oder Zinndrahts infolge des Pressvorgangs, insbesondere dessen Dickenänderung, gemessen wird. Auch Druckpapiere, wie sie z.B. in einem Nadeldrucker eingesetzt werden, können hilfreich sein, um Zonen unterschiedlicher Drücke mit Hilfe unterschiedlicher Verfärbung des Druckpapiers erkennbar zu machen.

Hat man alle Daten ermittelt, so wird eine Konstruktionszeichnung eines Presspolsters mittels eines CAD-Programms erstellt und die Raumkoordinaten X, Y, Z berechnet, die zur Erstellung es Druckprogramms nötig sind. Die Druckeinrichtung kann mittels der digitalisierten Daten exakt gesteuert werden, so dass eine nahezu identische Reproduktion der Polsterschicht wiederum vorgenommen werden kann.

Die Besonderheit des erfindungsgemäßen Presspolsters und der Verfahrensweise seiner Herstellung besteht darin, dass partiell unterschiedliche Polsterschichten in Form eines Elastomerauftrags aufgetragen werden können, die sehr genau den geometrischen Gegebenheiten der jeweiligen Pressenanlage Rechnung tragen, um im späteren Pressbetrieb größere Druckunterschiede über die Pressenfläche zu vermeiden. Demgegenüber werden nach dem Stand der Technik die Presspolster allein im Webprozess hergestellt, wobei das Elastomermaterial als Mantelschicht von gleicher Dicke bereits in den zu verwebenden Fäden enthalten ist oder wobei gleichmäßig dicke Kautschukschichten auf ein Träger- bzw. Stützgewebe mit durchgängig gleicher Dicke aufgetragen (aufgerakelt) und dann ausgehärtet werden. Bei beiden Herstellungsweisen sind partiell unterschiedliche Polsterdicken nicht vorgesehen, da der Herstellungsprozess dieses auch nicht ohne weiteres zulässt.

Zur Herstellung eines erfindungsgemäßen Presspolsters wird das in einem ersten Schritt hergestellte, vorzugsweise metallische Stützgewebe plan auf einem Drucktisch der Druckeinrichtung aufgespannt und fixiert. Der Druckkopf wird beim Herstellen der Polsterschichten entlang der Längskante des Arbeitstisches geführt, wobei es sich hierbei vorzugsweise um die Y-Achse handelt. Senkrecht zur Y-Achse, d.h. in Richtung der X-Achse, bewegt sich der Druckkopf hin und her. Eine UV-Lichtquelle ist nachgeschaltet und wird hinter dem Druckkopf in ähnlicher Weise geführt. Will man die Leistungsfähigkeit und den Durchsatz einer Druckeinrichtung erhöhen, so können auch mehrere Druckköpfe und UV-Lichtquellen innerhalb desselben Druckers zeitlich parallel eingesetzt werden.

Für den vorzugsweise schichtweisen Auftrag der Polsterschicht wird vorzugsweise eine spezielle Kautschuk-Mischung eingesetzt, die vorzugsweise einen Platinkatalysator enthält. Dabei erfolgt die Vernetzung der Moleküle des Kautschuks mittels UV-Licht. Die Düse der Druckeinrichtung setzt relativ schnell einen Kautschuktropfen nach dem anderen auf dem Stützgewebe exakt dort ab, wo es das CAD-Programm vorgibt. Es entsteht so Schicht für Schicht aus der virtuellen Zeichnung eine dreidimensionale Polsterschicht. Eine an der Druckeinrichtung positionierte UV-Lichtquelle wandert über die ausgedruckten Tropfen, die zu schmalen Streifen zusammengeflossen sind, und vernetzt bzw. vulkanisiert den (Silikon)Kautschuk zu einem (Silikon)Elastomer. Die Druckeinrichtung trägt anschließend wieder eine weitere Schicht bzw. Lage (Silikon)Kautschuk auf, die sich mit der bereits vulkanisierten Schicht verbindet. Auf diese Weise entsteht ein homogener "Körper" bzw. eine homogene Polsterschicht. Die Anzahl der einzelnen übereinander aufgetragenen Schichten richtet sich nach der vorgegebenen Dicke des Elastomerauftrags, wobei sich die Dicke beispielsweise in Richtung der Z-Achse des gewählten Koordinatensystems erstreckt.

### Ausführungsbeispiel

Die Erfindung wird nachfolgend anhand eines Ausführungsbeispiels eines Presspolsters, das in der Zeichnung dargestellt ist, näher erläutert.

Es zeigt:
- Figur 1:: eine Draufsicht auf ein Presspolster mit sich kreuzenden Kettfäden und Schussfäden,
- Figur 2:: einen vergrößerten Ausschnitt eines Schussfadens mit daran anhaftendem Silikonelastomer und
- Figur 3:: den Ausschnitt wie in Figur 2, jedoch in komprimiertem Zustand des Schussfadens unter dem Pressdruck.

Ein Presspolster 1 weist ein Stützgewebe S auf, das aus sich kreuzenden Kettfäden 2 und Schussfäden 3 gebildet ist, die jeweils aus verlitzten Metalleinzelfäden bestehen. Die X-Koordinate verläuft dabei in Richtung der Schussfäden 3, die Y-Koordinate in Richtung der Kettfäden 2 und die Z-Koordinate senkrecht sowohl zu der X-Koordinate als auch zu der Y-Koordinate. Die Z-Koordinate erstreckt sich somit in Dickenrichtung des Presspolsters 1.

Im vorliegenden Fall erstreckt sich ein Silikon-Elastomerauftrag 4 in Form von Streifen 6 parallel zu den Schussfäden 3. Streifen 6 des Silikon-Elastomerauftrags 4 besitzen eine Breite B, die deutlich größer als der Durchmesser D der Schussfäden 3 ist (hier: ungefähr das 3- bis 4-fache), wobei die einzelnen Streifen 6 des Silikon-Elastomerauftrags 4 sich nicht berühren, weshalb in Richtung der Schussfäden 3 jeweils zwischen benachbarten Schussfäden 3 gleichfalls streifenförmige Freiräume 7 verbleiben, die von den jeweiligen Kettfäden 2 unterbrochen werden. Die Breite der Freiräume 7 entspricht etwa dem Durchmesser D der Schussfäden 3.

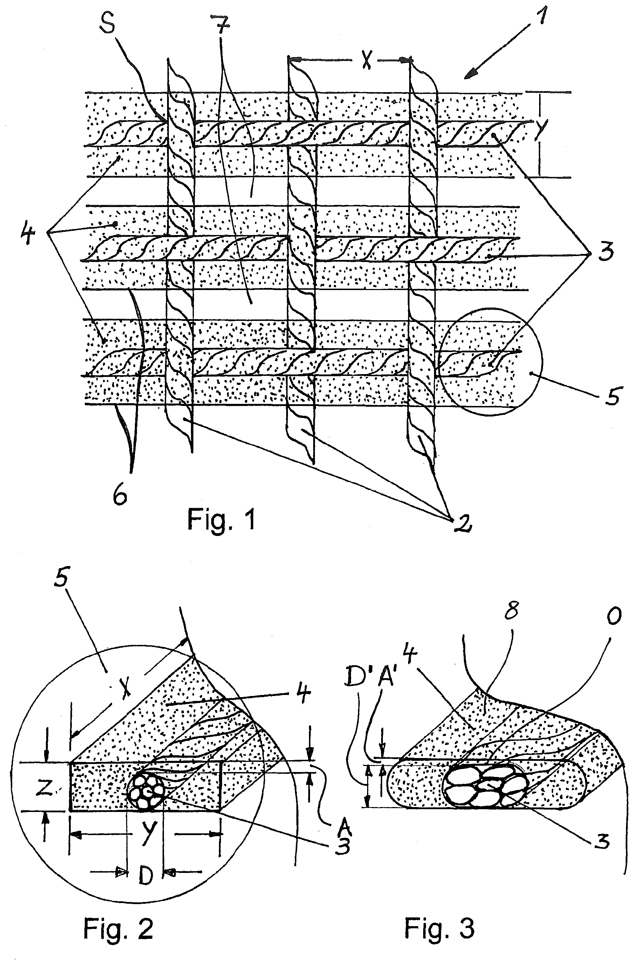

Figur 2 zeigt in einer vergrößerten Darstellung einen Ausschnitt 5 aus Figur 2 in vergrößerter perspektivischer Darstellung. Anhand eines gedachten Schnittes parallel zu der Z-Koordinate durch einen Schussfaden 3 ist erkennbar, dass der streifenförmige Silikon-Elastomerauftrag 4 eine Auftragshöhe Z, eine Auftragsbreite Y und eine Auftragslänge X besitzt, wobei sich die zwischen jeweils zwei benachbarten Kettfäden 2 erstreckenden Auftragslängen in Richtung der X-Koordinate jeweils aneinandergesetzt sind, um eine sich über die gesamte Länge der Schussfäden 3 in dem Presspolster 1 erstreckende Länge des Silikon-Elastomerauftrags 4 zu erreichen.

Der Figur 3 lässt sich entnehmen, dass während eines Pressvorgangs, d.h. unter Einwirkung des Pressdrucks, sowohl der Silikon-Elastomerauftrag 4 als auch der metallische Schussfaden 3 komprimiert wird. Der Silikon-Elastomerauftrag ändert dabei seine Querschnittsform von rechteckig mit vergleichsweise scharfen Kanten zu oval, d.h. mit zueinander paralleler Ober- und Unterseite und gerundeten Seitenlinien, d.h. konvexen Seitenflächen. Bei den Schussfäden 3 findet eine Verformung von einem runden Querschnitt im unbelasteten Zustand zu einem ebenfalls ovalen Querschnitt unter Druckeinwirkung statt, wobei die in Richtung der Z-Koordinate gemessene Dicke D' dabei gegenüber dem ursprünglichen Durchmesser D entsprechend reduziert wird.

Wie aus Figur 3 ersichtlich, haben unter Pressdruck alle unteren, bzw. bei Drehung des Presspolsters 1, alle oberen Metallfäden ("untere" und "oberen" jeweils bezogen auf die Kreuzungspunkte der Kettfäden 2 und Schussfäden 3) engen Kontakt mit der Heizplatte und/oder dem Pressblech (beides nicht in Figur 3 eingezeichnet) und zwar gleichmäßig. Dadurch wird ein gleichmäßiger Wärmefluss unter Pressdruck von der Heizplatte auf das Pressgut ermöglicht, der sich sehr positiv auf die Qualität der beschichteten Oberflächen auswirkt.

Nach dem Stand der Technik übertragen alle Presspolster nur partiell die Wärme, da sie nur über einen punktweisen Kontakt mit der Heizplatte verfügen. Bei den gewebten Presspolstern mit Silikonfäden haben nur die freien, hoch stehenden Metallfäden Kontakt mit den Heizplatten. Bei den flächig mit einem Silikonelastomer beschichteten Polstern können ebenfalls nur die über die Silikonelastomerschicht vorstehenden Metallfäden den wärmeleitenden Kontakt ausbilden. Demgegenüber weist das erfindungsgemäße Presspolster 1 nur auf einer Seite, nämlich der beschichteten Seite, eine Polsterschicht, d.h. einen Silikon-Elastomerauftrag 4, auf. Demgegenüber zeigt die unbeschichtete Seite die größere Metallfläche als Kontaktfläche, weshalb ein sehr schneller Wärmefluss in der Pressenanlage stattfindet.

Wird das Presspolster 1 unter Druck komprimiert, so wird der Silikon-Elastomerauftrag 4, wie in Figur 3 gezeigt, derart zusammengepresst, dass die metallischen Kettfäden 2 und Schussfäden 3 auf der Beschichtungsseite ebenfalls einen sehr engen Kontakt zur Heizplatte oder dem Pressblech (je nach Orientierung beim Einlegen in die Pressenanlage) ausbilden. Erkennbar ist dies bei einem Vergleich der Abstände A und A' zwischen der Oberseite O des in den Silikon-Elastomerauftrag 4 eingebetteten Schussfadens 3 im unbelasteten Zustand gemäß Figur 2 gegenüber dem komprimierten Zustand gemäß Figur 3 und der Oberfläche des Presspolsters 1. Durch die Verlagerung des Silikon-Elastomerauftrags 4 in Y-Richtung im komprimierten Zustand gemäß Figur 3 liegt der (komprimierte) Schussfaden 3 sehr viel näher an der Oberfläche 8 des Silikonelastomerauftrags 4 (und damit auch an der Oberfläche des Presspolsters 1) als im unbelasteten Zustand, wodurch die Wärmeleitfähigkeit durch das Polster verbessert wird. An der Unterseite des Silikon-Elastomerauftrags 4 befindet sich der Schussfaden 3 sowohl im unbelasteten (Figur 2) als auch im belasteten Zustand (Figur 3) des Presspolsters 1 unmittelbar an der Oberfläche des Silikonelastomerauftrags 4, wodurch auch hier ein sehr guter Wärmeübergang ermöglicht wird. Im komprimierten Zustand des Presspolsters gemäß Figur 3 wird der wärmeleitende Kontakt durch die dargestellte Verbreiterung des Schussfadens 3 hin zu einer ovalen Form noch verbessert. Es ist zu beachten, dass der Auftrag des unvernetzten Silikonkauschuks während der Herstellung des Presspolsters 1 von der in Figur 1 sowie den Figuren 2 und 3 sichtbaren Oberseite des Presspolsters 1 her erfolgt. Trotz des wellenförmigen Verlaufs der miteinander verwobenen Kettfäden 2 und Schussfäden 3 des Presspolsters 1 bildet der streifenförmige Silikon-Elastomeraufrag 4 jeweils eine ebene Oberfläche aus, zu der die eingebetteten Schussfäden 3 über ihre Länge betrachtet jeweils einen unterschiedlichen oberen Abstand zu der nach oben gewandten Oberfläche 8 der Streifen 6 des Silikon-Elastomerauftrags 4 besitzen.

### Bezugszeichenliste

- 1: Presspolster
- 2: Kettfaden
- 3: Schussfaden
- 4: Silikon-Elastomerauftrag
- 5: Ausschnitt
- 6: Streifen
- 7: Freiraum
- 8: Oberfläche

- B: Breite
- D: Durchmesser
- D': Dicke
- O: Oberseite
- S: Stützgewebe

## Patentansprüche

1. Presspolster (1) für den Einsatz in einer hydraulischen Ein- oder Mehretagen-Heizpresse, umfassend ein Stützgewebe (S), vorzugsweise aufweisend Metallfäden, und einen Elastomerauftrag (4) bestehend aus einem vernetzten Kautschuk, **dadurch gekennzeichnet, dass** der Elastomerauftrag (4) im 3D-Druckverfahren auf das Stützgewebe (S) mittels einer Druckeinrichtung aufgetragen ist, wobei der Auftrag gemäß zuvor ermittelter, digitalisierter Daten einer 3D-Topographie des gewünschten Elastomerauftrags (4) erfolgt.

2. Presspolster nach Anspruch 1, **dadurch gekennzeichnet, dass** der Kautschuk unter Anwesenheit eines Platinkatalysators vernetzt ist.

3. Presspolster nach Anspruch 1 oder 2, **dadurch gekennzeichnet, dass** der vorzugsweise platinkatalysierte Kautschuk mittels UV-Licht vernetzt bzw. ausvulkanisiert ist.

4. Presspolster nach einem der Ansprüche 1 bis 3, **dadurch gekennzeichnet, dass** der Kautschuk ein Silikonkautschuk, ein Fluorsilikonkautschuk, ein Fluorkautschuk oder eine Mischung oder ein Blend aus zwei oder mehr der vorgenannten Kautschuke ist.

5. Presspolster nach einem der Ansprüche 1 bis 4, **dadurch gekennzeichnet, dass** eine Schicht des Elastomerauftrags (4) mit einer darüber aufgetragenen Schicht des Elastomerauftrags (4) verbunden ist.

6. Presspolster nach einem der Ansprüche 1 bis 5, **dadurch gekennzeichnet, dass** das metallische Stützgewebe (S) Metallfäden mit unterschiedlichen Wärmeleitfähigkeiten aufweist, die entsprechend den Wärmeverteilungszonen, die in Heizplatten einer Heizpresse vorhanden sind, über das Presspolster (1) verteilt angeordnet sind.

7. Verfahren zur Herstellung eines Presspolsters (1) für den Einsatz in einer hydraulischen Ein- oder Mehretagen-Heizpresse, umfassend ein Stützgewebe (S), vorzugsweise aufweisend Metallfäden, und einen Elastomerauftrag (4), bestehend aus einem vernetzten Kautschuk, **dadurch gekennzeichnet, dass** mindestens ein in einer Druckeinrichtung mittels eines 3D-Druckverfahrens auf das Stützgewebe (S) Kautschuk aufgebracht wird, der zu einem Elastomerauftrag (4) vernetzt wird, wobei der Auftrag des Kautschuks gemäß zuvor ermittelter digitaler Daten einer 3D-Topographie des gewünschten Elastomerauftrags (4) erfolgt.

8. Verfahren nach Anspruch 7, **dadurch gekennzeichnet, dass** die Steuerung der Druckeinrichtung nach zuvor festgelegten X-, Y- und Z-Koordinaten erfolgt, die verantwortlich für die Auftragslänge X, Auftragsbreite Y und Auftragshöhe Z sind.

9. Verfahren nach Anspruch 7 oder 8, **dadurch gekennzeichnet, dass** der Auftrag des Kautschuks in Form von Streifen (6) erfolgt, die parallel zu Kettfäden (2) und/oder Schussfäden (3) des Stützgewebes (S) verlaufen, wobei vorzugsweise zwischen zueinander parallelen Streifen (6) Freiräume (7) ausgebildet werden.

## Claims

1. A press pad (1) for use in a hydraulic single-stage or multi-stage heat press, comprising a support fabric (S), preferably having metallic filaments, and an elastomeric deposit (4) consisting of a cured rubber, **characterized in that** the elastomeric deposit (4) is applied to the support fabric (S) in a 3D printing process by means of a printing device, wherein the deposit is applied in accordance with previously determined digitized data for a 3D topography of the desired elastomeric deposit (4).

2. The press pad as claimed in claim 1, **characterized in that** the rubber is cured in the presence of a platinum catalyst.

3. The press pad as claimed in claim 1 or claim 2, **characterized in that** the rubber, which is preferably catalysed with platinum, is cured or vulcanized by means of UV light.

4. The press pad as claimed in one of claims 1 to 3, **characterized in that** the rubber is a silicone rubber, a fluorosilicone rubber, a fluorinated rubber or a mixture or a blend of two or more of said rubbers.

5. The press pad as claimed in one of claims 1 to 4, **characterized in that** a layer of the elastomeric deposit (4) is bonded to a layer of elastomeric deposit (4) which is applied over it.

6. The press pad as claimed in one of claims 1 to 5, **characterized in that** the metal support fabric (S) has metallic filaments with different thermal conductivities which are distributed over the press pad (1) in a manner which corresponds to heat distribution zones which are present in heating plates of a heat press.

7. A process for the production of a press pad (1) for use in a hydraulic single-stage or multi-stage heat press, comprising a support fabric (S), preferably having metallic filaments, and an elastomeric deposit (4) consisting of a cured rubber, **characterized in that** at least one rubber is applied to the support fabric (S) in a printing device by means of a 3D printing process and is cured to form an elastomeric deposit (4), wherein the rubber is applied in accordance with previously determined digital data for a 3D topography of the desired elastomeric deposit (4).

8. The process as claimed in claim 7, **characterized in that** the printing device is controlled in accordance with previously specified X, Y and Z coordinates which are responsible for the deposit length X, deposit width Y and deposit height Z.

9. The process as claimed in claim 7 or claim 8, **characterized in that** the rubber is applied in the form of strips (6) which run parallel to warp filaments (2) and/or weft filaments (3) of the support fabric (S), wherein preferably, free spaces (7) are formed between strips (6) which are parallel to each other.

## Revendications

1. Garniture de compression (1) destinée à être utilisée dans une presse chauffante hydraulique mono-étagée ou multi-étagée, comprenant un tissu de soutien (S), comportant de préférence des fils de métal, et une application (4) d'élastomère constituée d'un caoutchouc réticulé, **caractérisée en ce que** l'application (4) d'élastomère sur le tissu de soutien (S) a lieu par procédé d'impression en 3D à l'aide d'un dispositif d'impression, l'application s'effectuant selon des données numérisées préalablement déterminées d'une topographie en 3D de l'application (4) d'élastomère souhaitée.

2. Garniture de compression selon la revendication 1, **caractérisée en ce que** le caoutchouc est réticulé en présence d'un catalyseur au platine.

3. Garniture de compression selon la revendication 1 ou 2, **caractérisée en ce que** le caoutchouc catalysé de préférence au platine est réticulé ou vulcanisé par lumière UV.

4. Garniture de compression selon l'une quelconque des revendications 1 à 3, **caractérisée en ce que** le caoutchouc est un caoutchouc de silicone, un caoutchouc de silicone fluoré, un caoutchouc fluoré ou un mélange ou un blend de deux ou plus des caoutchoucs précédemment cités.

5. Garniture de compression selon l'une quelconque des revendications 1 à 4, **caractérisée en ce qu'**une couche de l'application (4) d'élastomère est reliée avec une couche appliquée en superposition de l'application (4) d'élastomère.

6. Garniture de compression selon l'une quelconque des revendications 1 à 5, **caractérisée en ce que** le tissu de soutien (S) métallique comporte des fils de métal faisant preuve de différentes conductibilités thermiques, qui en fonction des zones de distribution thermique qui sont présentes dans des plaques chauffantes d'une presse chauffante sont placés en distribution sur la garniture de compression (1).

7. Procédé de fabrication d'une garniture de compression (1) destinée à être utilisée dans une presse chauffante hydraulique mono-étagée ou multi-étagée, comprenant un tissu de soutien (S), comportant de préférence des fils de métal, et une application (4) d'élastomère constituée d'un caoutchouc réticulé, **caractérisé en ce que** dans un dispositif d'impression en 3D, l'on applique au moins un caoutchouc que l'on réticule en une application (4) d'élastomère, l'application de caoutchouc s'effectuant selon les données numériques préalablement déterminées d'une topographie en 3D de l'application (4) d'élastomère souhaitée.

8. Procédé selon la revendication 7, **caractérisé en ce que** la commande du dispositif d'impression s'effectue selon des coordonnées X, Y et Z précédemment fixées, qui sont responsables de la longueur d'application X, de la largeur d'application Y et de la hauteur d'application Z.

9. Procédé selon la revendication 7 ou 8, **caractérisé en ce que** l'application du caoutchouc s'effectue en forme de rubans (6) qui s'écoulent à la parallèle de fils de chaîne (2) et/ou de fils de trame (3) du tissu de soutien (S), lors duquel entre des rubans (6) parallèles les uns aux autres, l'on conçoit de préférence des espaces libres (7).
